# EUROPEAN PATENT SPECIFICATION

(11) **EP 4 070 337 B1**
(45) Date of publication and mention of the grant of the patent: **19.06.2024**
(21) Application number: 20823748.7
(22) Date of filing: 04.12.2020
(51) Int. Cl.: G21B 1/13, F27B 5/06, F27D 1/16, F27D 9/00

(54) **TRANSPIRATIONAL FIRST WALL COOLING**
TRANSPIRATIONALE ERSTWANDKÜHLUNG
REFROIDISSEMENT DE PREMIÈRE PAROI PAR TRANSPIRATION

(30) Priority: 06.12.2019 GB 201917904
(43) Date of publication of application: 12.10.2022
(73) Proprietor: Tokamak Energy Ltd, Abingdon, Oxfordshire OX14 4SD (GB)
(72) Inventor: SLADE, Robert, Abingdon Oxfordshire OX14 4SD (GB); INGLESIAS, Daniel, Abingdon Oxfordshire OX14 4SD (GB)
(74) Representative: Marks & Clerk LLP
(86) International application number: PCT/EP2020/084737
(87) International publication number: WO 2021/110969

(56) References cited:
- EP-A2- 2 600 350
- CN-A- 110 428 912
- SU-A1- 708 940
- JAWORSKI M A ET AL: "Liquid-metal plasma-facing component research on the National Spherical Torus Experiment", PLASMA PHYSICS AND CONTROLLED FUSION, IOP, BRISTOL, GB, vol. 55, no. 12, 28 November 2013 (2013-11-28), page 124040, XP020253961, ISSN: 0741-3335, DOI: 10.1088/0741-3335/55/12/124040 [retrieved on 2013-11-28]
- VERTKOV A V ET AL: "Experience in the Development of Liquid Metal Plasma Facing Elements Based on Capillary-Porous Structures for a Steady-State Tokamak (Survey)", PHYSICS OF ATOMIC NUCLEI, PLEIADES PUBLISHING, MOSCOW, vol. 81, no. 7, 5 March 2019 (2019-03-05), pages 1000-1007, XP036719188, ISSN: 1063-7788, DOI: 10.1134/S1063778818070141 [retrieved on 2019-03-05]
- RINDT P ET AL: "Power handling and vapor shielding of pre-filled lithium divertor targets in Magnum-PSI", NUCLEAR FUSION, PUBLISHING SECTION. VIENNA, AT, vol. 59, no. 5, 15 March 2019 (2019-03-15) , page 56003, XP020335996, ISSN: 0029-5515, DOI: 10.1088/1741-4326/AB0560 [retrieved on 2019-03-15]

## Description

### Field of the Invention

The present invention relates to plasma chambers. In particular, the present invention relates to a first wall structure for a plasma chamber.

### Background

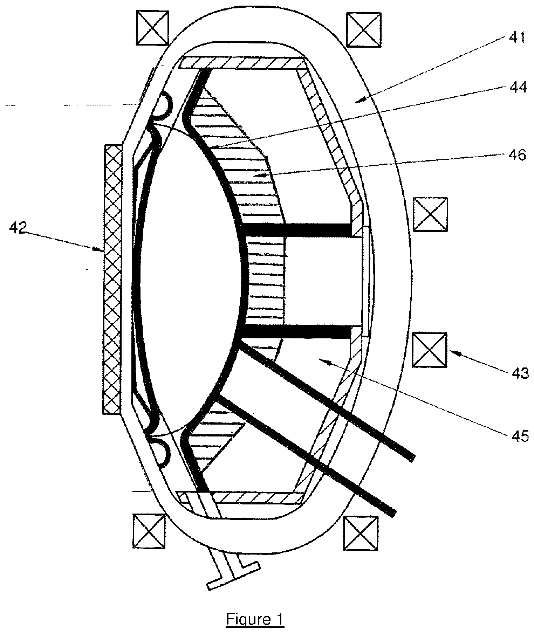

Figure 1 is a cross section of an exemplary tokamak plasma chamber. The major components of the tokamak are a toroidal field magnet (TF) 41, and poloidal field (PF) coils 43 that magnetically confine, shape and control the plasma inside a toroidal vacuum vessel 44, and a central column 42 (which comprises the inner sections of the TF magnet, plus cooling and structural support). The tokamak further comprises shielding 45,46. The plasma is contained within the vacuum vessel 44, the interior surface of which is called the "first wall". The vacuum vessel may have ports 47, 48 for inserting sensors or other components into the vessel, or for techniques such as neutral beam injection.

The term "first wall" may also apply to any directly plasma-facing components of the plasma chamber, for example a divertor, baffle, limiter, or covers over internal coils.

A tokamak is one kind of magnetic confinement plasma chamber - others include stellerators or spheromaks. Each kind of magnetic confinement chamber will have a similar broad principle - i.e. a vacuum chamber and one or more magnets, where the magnets produce a magnetic field which keeps the plasma within the vacuum chamber and minimises interactions with the walls.

The plasma produced in a magnetic confinement plasma chamber is prone to unstable events. Some of these put the plasma directly in contact with the walls of the plasma chamber, producing highly localized heated areas. The duration of these events is very short-lasting up to hundreds of milliseconds-but the amount of energy density deposited is enough to melt even highly robust refractory metals such as Tungsten. As well as the obvious structural issues, this is a problem in many applications as the heavy tungsten (or other refractory metal) atoms can "pollute" the plasma in the chamber, causing it to cool down.

The pollution effect can be mitigated via Itihiumisation or boronisation - coating the inside of the plasma chamber wall (the "first wall") with a thin layer of lithium or boron, so that this will evaporate before the tungsten. However, during an unstable event, the heat will still cause structural damage to the tungsten, and the lithium or boron layer will eventually wear down.

There is therefore a need to keep the refractory metal of the first wall cool - well below its melting point - to prevent any structural damage during an unstable event, and to reduce the evaporation of heavy atoms into the plasma during such an event.

SU708940A1 discloses a first wall structure for a plasma chamber comprising a porous heat resisting material filled with a solid-phase filler.

### Summary

According to a first aspect, there is provided a first wall structure for a plasma chamber. The first wall structure comprises and inner wall and a solid deposit. The inner wall is formed from a refractory metal or an alloy or composite thereof and has a plurality of pores. The solid deposit in thermal contact with the inner wall, such that the plurality of pores provide a passage from an exterior of the first wall structure to the deposit. The deposit consists of a material having a boiling point less than a melting point of the refractory metal, and comprises lithium or tin. The first wall structure is configured such that at a normal operating temperature of the first wall structure, the deposit is solid.

According to a second aspect, there is provided a magnetic confinement plasma chamber comprising a first wall structure according to the first aspect, wherein the inner wall of the first wall structure is an inner wall of the plasma chamber.

### Brief Description of the Drawings

Figure 1 is a cross section of a tokamak plasma chamber,
Figure 2 is a cross section of an exemplary first wall section,
Figure 3 shows the first wall section of Figure 2 during an unstable event,
Figure 4 is a cross section of a further exemplary first wall section.

### Detailed Description

The concept further described below is a first wall structure that uses transpirational cooling with lithium (or tin, or another material with a suitable melting and boiling point, as discussed later).

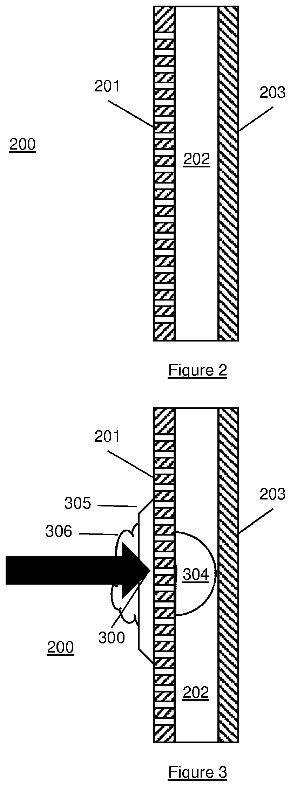

The first wall structure is illustrated in Figure 2. Figure 2 only shows a small section of the first wall, which is shown in cross section, and is shown flat and oriented vertically for clarity. A similar structure may be used for curved first walls, or at any desired orientation. The left hand side of the figure is the inside 200 of the plasma chamber. The first wall structure comprises an inner wall 201 made from tungsten, molybdenum, or another a refractory metal (e.g. niobium, tantalum, titanium, vanadium, chromium, zirconium, hafnium, and/or rhenium, or an alloy or composite containing a refractory metal), and having a number of pores through it. The pores provide a passage to a deposit 202, which is solid at the normal operating temperature of the first wall. The structure also comprises a back support 203, which provides structural support and prevents the deposit from leaking outside the plasma chamber.

The deposit consists of a material with a boiling point less than that of the refractory metal used for the inner wall, and a melting point greater than the temperature of the first wall during normal operation - i.e. a material which will be solid during general use of the plasma chamber, but which will boil before the inner wall metal melts if the first wall section is heated. Lithium is a promising candidate, due to its low atomic number, and will be used for the examples below, but any material having the correct melting and boiling points could be used (including compounds). In particular, the relevant melting and boiling points are those in vacuum - though in practice these are generally close to the melting and boiling points under atmospheric pressure.

Figure 3 shows the effect of an unstable event on a section of the first wall. During the unstable event, contact 300 between the wall and the plasma on the inside 200 of the plasma chamber causes a large amount of heating. This heat is conducted by the inner wall 201 to the lithium deposit 202, which melts, forming a region of liquid lithium 304. This liquid lithium is forced out of the pores in the inner wall 201, to form a coating 305 on the surface of the inner wall. This coating may then evaporate or boil 306 due to the heat.

The latent heat of melting and vaporisation of the lithium will absorb the heat from the unstable event well before the refractory metal melts (the boiling point of lithium is 1603K, the melting points of all refractory metals are over 2000K). In addition, the use of lithium (a light element) reduces the impact of any evaporated material on the plasma. This is particularly useful for fusion applications, as lithium will form tritium and helium under bombardment by neutrons.

The structure shown in Figure 2 will be effectively limited use - once the lithium deposit in a section of wall has melted and been evaporated away within the chamber, that section will not refill. However, this would still be suitable for short to medium term use of a plasma chamber, with occasional repair to refill the lithium deposit.

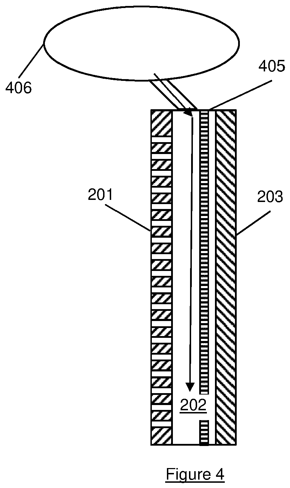

For longer term applications, a refilling system can be added as shown in Figure 4. In addition to the inner wall 201 and lithium deposit 202, the structure of Figure 4 comprises a heater 405, which is in thermal contact with the lithium deposit and configured to melt the lithium such that it flows, and additional liquid lithium can be added into the deposit from an external source 406 (shown schematically). The liquid lithium may be allowed to flow under gravity (with additional lithium being added from the top of the deposit), or it may be pumped into the deposit.

The addition of lithium may be done periodically, or may be done in response to the detection of an unstable event. The detection may be by plasma monitoring devices in the plasma chamber, by temperature monitoring of the first wall (e.g. by thermal sensors built into the lithium deposit, or by infra-red imaging of the first wall), or by direct monitoring of the lithium deposit (e.g. monitoring the electrical resistance, as the resistance will increase when a void is formed by the lithium melting and leaving the deposit).

The heater may be a resistance heater, a flow of hot gas, or any other suitable heating apparatus. Using a flow of hot gas is likely to simplify the design, as any electrical components can be located outside of the first wall structure, and so there is a reduced need to account for the high magnetic flux that will be experienced by the first wall. The hot gas flows through pipes in thermal contact with the lithium deposit. To further simplify the construction, the gas supply may be configured such that the flowing gas normally provides cooling to the first wall, and such that, when melting of the deposit is required, hot gas is flowed through the first wall cooling channels instead, in order to melt the deposit.

Some liquid lithium may leak out of the pores in the inner wall during the refilling process. Controlling the pressure of the liquid lithium during the refilling process may be done to reduce the leaks of lithium, or excess lithium may be allowed to flow into the reactor and collected for reprocessing (e.g. via an outlet at the bottom of the plasma vessel).

The first wall structure described above may be provided as a single unit for a plasma chamber, or may be provided as tiles which are assembled into the first wall of the plasma chamber. An intermediate solution between plasma chamber and tiles would be large solid blanket structures including first-wall, shielding, and optionally breeding functions, which are assembled inside the chamber. Similarly constructed first wall sections may be used as part of limiters, divertors or baffles within the tokamak, or as partial or full covers for components such as field coils which are within the plasma chamber.

## Claims

1. A first wall structure for a plasma chamber, the first wall structure comprising:
an inner wall (201) formed from a refractory metal or an alloy or composite thereof and having a plurality of pores;
a solid deposit (202) in thermal contact with the inner wall, such that the plurality of pores provide a passage from an exterior of the first wall structure to the deposit, wherein the deposit consists of a material having a boiling point less than a melting point of the refractory metal;
wherein the first wall structure is configured such that at a normal operating temperature of the first wall structure, the deposit is solid;
**characterized in that** the solid deposit comprises lithium and/or tin.

2. A first wall structure according to claim 1, and comprising a heater (405) configured to melt the deposit, and a supply unit configured to supply additional material to the deposit.

3. A first wall structure according to claim 2, wherein the heater comprises a pipe in thermal contact with the deposit, and a gas supply unit configured to supply a hot gas to the pipe in order to melt the deposit.

4. A first wall structure according to claim 2 or 3, wherein the supply unit is configured to supply material to the top of the deposit.

5. A first wall structure according to any of claims 2 to 4, wherein the supply unit comprises a pump.

6. A first wall structure according to any of claims 2 to 5, and comprising a controller configured to activate the heater and the supply unit.

7. A first wall structure according to claim 6, and comprising a temperature sensor in thermal contact with the inner wall, wherein the controller is configured to activate the heater and the supply unit in response to the detection of a temperature greater than the melting point of the deposit.

8. A first wall structure according to claim 6 or 7, and comprising a sensor for monitoring an amount of material in the deposit, wherein the controller is configured to activate the heater and the supply unit in response to the amount of material in the deposit dropping below a threshold value.

9. A magnetic confinement plasma chamber comprising a first wall structure according to any preceding claim, wherein the inner wall of the first wall structure is an inner wall of the plasma chamber.

10. A plasma chamber according to claim 9, wherein the plasma chamber comprises a plurality of first wall structures according to any of claims 1 to 8, and wherein said structures are tiled to form the first wall of the plasma chamber.

## Patentansprüche

1. Erstwandstruktur für eine Plasmakammer, wobei die Erstwandstruktur umfasst:
eine innere Wand (201), die aus einem feuerfesten Metall oder einer Legierung oder einem Verbundwerkstoff davon gebildet ist und aufweisend einer Vielzahl von Poren;
eine feste Ablagerung (202), die in thermischem Kontakt mit der inneren Wand steht, so dass die Vielzahl der Poren einen Durchgang von einer Außenseite der Erstwandstruktur zur Ablagerung bereitstellt, wobei die Ablagerung aus einem Material besteht, dessen Siedepunkt unter dem Schmelzpunkt des feuerfesten Metalls liegt;
wobei die Erstwandstruktur so konfiguriert ist, dass bei einer normalen Betriebstemperatur der Erstwandstruktur die Ablagerung fest ist,
**dadurch gekennzeichnet, dass** die feste Ablagerung Lithium und/oder Zinn umfasst.

2. Erstwandstruktur nach Anspruch 1, und umfassend eine Heizvorrichtung (405), die zum Schmelzen der Ablagerung konfiguriert ist, und eine Zuführeinheit, die zum Zuführen von zusätzlichem Material zur Ablagerung konfiguriert ist.

3. Erstwandstruktur nach Anspruch 2, wobei die Heizvorrichtung ein Rohr in thermischem Kontakt mit der Ablagerung und eine Gaszuführeinheit umfasst, die so konfiguriert ist, dass sie dem Rohr ein heißes Gas zuführt, um die Ablagerung zu schmelzen.

4. Erstwandstruktur nach Anspruch 2 oder 3, wobei die Zuführeinheit so konfiguriert ist, dass sie Material zur Oberseite der Ablagerung zuführt.

5. Erstwandstruktur nach einem der Ansprüche 2 bis 4, wobei die Zuführeinheit eine Pumpe umfasst.

6. Erstwandstruktur nach einem der Ansprüche 2 bis 5, und umfassend eine Steuerung, die konfiguriert ist, um die Heizvorrichtung und die Zuführeinheit zu aktivieren.

7. Erstwandstruktur nach Anspruch 6, und umfassend einen Temperatursensor in thermischem Kontakt mit der inneren Wand, wobei die Steuerung so konfiguriert ist, dass sie die Heizvorrichtung und die Zuführeinheit als Reaktion auf die Erkennung einer Temperatur oberhalb des Schmelzpunkts der Ablagerung aktiviert.

8. Erstwandstruktur nach Anspruch 6 oder 7, und umfassend einen Sensor zur Überwachung einer Materialmenge in der Ablagerung, wobei die Steuerung so konfiguriert ist, dass sie die Heizvorrichtung und die Zuführeinheit aktiviert, in Reaktion darauf, dass die Materialmenge in der Ablagerung unter einen Schwellenwert fällt.

9. Plasmakammer mit magnetischem Einschluss, umfassend eine Erstwandstruktur nach einem der vorhergehenden Ansprüche, wobei die innere Wand der Erstwandstruktur eine innere Wand der Plasmakammer ist.

10. Plasmakammer nach Anspruch 9, wobei die Plasmakammer eine Vielzahl von Erstwandstrukturen nach einem der Ansprüche 1 bis 8 umfasst und wobei die Strukturen so kachelartig angeordnet sind, dass sie die erste Wand der Plasmakammer bilden.

## Revendications

1. Structure de première paroi pour une chambre à plasma, la structure à première paroi comprenant :
une paroi intérieure (201) formée d'un métal réfractaire ou d'un alliage ou d'un composite de celui-ci et présentant une pluralité de pores ;
un dépôt solide (202) en contact thermique avec la paroi intérieure, de sorte que la pluralité de pores fournit un passage d'un extérieur de la structure de première paroi au dépôt, dans laquelle le dépôt est constitué d'un matériau présentant un point d'ébullition inférieur à un point de fusion du métal réfractaire ;
dans laquelle la structure de première paroi est configurée de sorte qu'à une température de fonctionnement normale de la structure de première paroi, le dépôt soit solide ;
**caractérisée en ce que** le dépôt solide comprend du lithium et/ou de l'étain.

2. Structure de première paroi selon la revendication 1, et comprenant un dispositif de chauffage (405) configuré pour faire fondre le dépôt, et une unité d'alimentation configurée pour fournir du matériau supplémentaire au dépôt.

3. Structure de première paroi selon la revendication 2, dans laquelle le dispositif de chauffage comprend un tuyau en contact thermique avec le dépôt, et une unité d'alimentation en gaz configurée pour fournir un gaz chaud au tuyau afin de faire fondre le dépôt.

4. Structure de première paroi selon la revendication 2 ou la revendication 3, dans laquelle l'unité d'alimentation est configurée pour fournir un matériau dans le haut du dépôt.

5. Structure de première paroi selon l'une quelconque des revendications 2 à 4, dans laquelle l'unité d'alimentation comprend une pompe.

6. Structure de première paroi selon l'une quelconque des revendications 2 à 5 et comprenant un dispositif de commande configuré pour activer le dispositif de chauffage et l'unité d'alimentation.

7. Structure de première paroi selon la revendication 6, et comprenant un capteur de température en contact thermique avec la paroi intérieure, dans laquelle le dispositif de commande est configuré pour activer le dispositif de chauffage et l'unité d'alimentation en réponse à la détection d'une température supérieure au point de fusion du dépôt.

8. Structure de première paroi selon la revendication 6 ou la revendication 7, et comprenant un capteur permettant de surveiller une quantité de matériau dans le dépôt, dans laquelle le dispositif de commande est configuré pour activer le dispositif de chauffage et l'unité d'alimentation en réponse au fait que la quantité de matériau dans le dépôt tombe sous une valeur seuil.

9. Chambre à plasma de confinement magnétique comprenant une structure de première paroi selon l'une quelconque des revendications précédentes, dans laquelle la paroi interne de la structure de première paroi est une paroi interne de la chambre à plasma.

10. Chambre à plasma selon la revendication 9, dans laquelle la chambre à plasma comprend une pluralité de structures de première paroi selon l'une quelconque des revendications 1 à 8, et dans laquelle lesdites structures sont agencées sous formes de carreaux pour former la première paroi de la chambre à plasma.
